# EUROPÄISCHE PATENTSCHRIFT

(11) **EP 2 294 006 B1**
(45) Veröffentlichungstag und Bekanntmachung des Hinweises auf die Patenterteilung: **28.02.2018**
(21) Anmeldenummer: 09765670.6
(22) Anmeldetag: 23.04.2009
(51) Int. Cl.: C01B 33/03, C01B 33/107

(54) **VERFAHREN ZUR ENTFERNUNG VON BOR ENTHALTENDEN VERUNREINIGUNGEN AUS HALOGENSILANEN SOWIE ANLAGE ZUR DURCHFÜHRUNG DES VERFAHRENS**
METHOD FOR REMOVING BORON-CONTAINING IMPURITIES FROM HALOGEN SILANES AND APPARATUS FOR PERFORMING SAID METHOD
PROCÉDÉ POUR ÉLIMINER DES IMPURETÉS CONTENANT DU BORE D'HALOGÉNOSILANES ET INSTALLATION POUR METTRE EN OEUVRE LE PROCÉDÉ

(30) Priorität: 19.06.2008 DE 102008002537
(43) Veröffentlichungstag der Anmeldung: 16.03.2011
(73) Patentinhaber: Evonik Degussa GmbH, 45128 Essen (DE)
(72) Erfinder: SELIGER, Beate, 21629 Neu Wulmstorf (DE); SCHLADERBECK, Norbert, 65779 Kelkheim (DE); PAULI, Ingo, 61389 Schmitten (DE); MECKLENBURG, André, 01445 Radebeul (DE); SCHORK, Reinhold, 79618 Rheinfelden (DE); RAULEDER, Hartwig, 79618 Rheinfelden (DE); KROPFGANS, Frank, 79618 Rheinfelden (DE); DIEFENBACH, Joachim, 79618 Rheinfelden (DE)
(86) Internationale Anmeldenummer: PCT/EP2009/054877
(87) Internationale Veröffentlichungsnummer: WO 2009/153090

(56) Entgegenhaltungen:
- WO-A-02/38497
- WO-A-2006/098722
- DD-A3- 158 322
- US-A- 3 540 861
- US-A- 4 713 230

## Beschreibung

Die Erfindung betrifft ein Verfahren zur Verminderung des Gehaltes von Bor enthaltenden Verbindungen in Zusammensetzungen I umfassend mindestens ein Siliziumhalogenid, insbesondere von Chlorsilanen des Typs HₙSiCl₄₋ₙ mit n gleich 0, 1, 2 oder 3, durch Einbringen einer geringen Menge an Feuchte in die Zusammensetzung I in einem ersten Schritt und Abtrennen der hydrolysierten Bor und/oder Silizium enthaltenden Verbindungen in einem zweiten Schritt, indem eine vorgereinigte Zusammensetzung II mit einem verminderten Gehalt an Bor erhalten wird, insbesondere kann der erste und zweite Schritt in mindestens einem oder mehreren Zyklen gefahren werden. Ferner wird eine Anlage zur Durchführung des Verfahrens sowie eine Gesamtanlage, in die diese Anlage integriert ist, beansprucht.

Halogensilane und besonders Chlorsilane, wie Monochlorsilan, Dichlorsilan, Trichlorsilan und Tetrachlorsilan sind wichtige Zwischenprodukte bei der Herstellung von Reinstsilizium für die Halbleiterindustrie, von Monosilan SiH₄ für die Photovoltaikindustrie, in der weiteren Umsetzung zu organofunktionellen Silanen, wie Haftvermittlern oder auch zur Herstellung von hochreinem SiO₂ zur Herstellung von Lichtwellenleitern oder für die Pharmazeutische Industrie. Allen Industrieapplikationen gemeinsam sind die sehr hohen Reinheitsanforderungen an die umzusetzenden Halogensilane, deren Verunreinigung höchstens im Bereich von wenigen mg/kg (ppm-Bereich) und in der Halbleiterindustrie im Bereich von wenigen µg/kg (ppb-Bereich) liegen darf.

Zur Herstellung von Rohchlorsilanen wird metallurgisches Silizium hydrochloriert. Die Umsetzung geschieht in der Regel in einem Wirbelschichtreaktor oder in einem Festbettreaktor, seltener ist eine Umsetzung in einem Röhrenofen (u. a. B. Kanner und K. M. Lewis "Commercial Production of Silanes by the direct Synthesis", Seiten 1 bis 66, Studies in Organic Chemistry 49, Catalyzed Direct Reactions of Silicon edited by K.M. Lewis und D. G. Rethwisch, 1993, Elsevier Science Publishers; DE 36 40 172 C1; W. C. Breneman et al., "A comparison of the Trichlorosilane and silane routes in the purification of metallurgical grade silicon to semiconductor quality", Silicon for the chemical industry IV, Geiranger, Norway, June 3 - 5, 1998, Seiten 1001 bis 112).

Alternativ kann die Herstellung auch durch Umsetzung von Tetrachlorsilan mit metallurgischem Silizium und Chlorwasserstoff erfolgen (H. Samori et al. "Effects of trace elements in metallurgical silicon on trichlorosilane synthesis reaction", Silicon for the chemical industry III, Sandefjord, Norway, June 18 - 20, 1996, Seiten 157 bis 167). In Gegenwart von Wasserstoff kann die Ausbeute an Trichlorsilan in der Reaktion gesteigert werden.

Des Weiteren sind zur Steigerung der Ausbeute an Trichlorsilan Verfahren zur Hydrodehalogenierung von Siliziumtetrachlorid in Gegenwart von Wasserstoff an Katalysatoren bekannt. Als Katalysatoren können trägerfreie oder geträgerte Katalysatoren, basierend auf Übergangsmetallen oder Übergangsmetallverbindungen, eingesetzt werden.

Den Verfahren gemeinsam ist, dass die über das umgesetzte metallurgische Silizium eingebrachten Verunreinigungen teilweise ebenfalls chloriert werden und mit in nachfolgende Prozesse verschleppt werden können. Die auf Eisen, Kupfer, Aluminium und Mangan basierenden Verunreinigungen lassen sich in der Regel im Wesentlichen vollständig aus den Chlorsilanverbindungen durch Destillationsschritte abtrennen. Die halogenierten Arsen-, Phosphor- und Bor-Verbindungen weisen allerdings ähnliche chemisch-physikalische Eigenschaften wie die Chlorsilane auf und lassen sich daher von diesen nur unzureichend mittels destillativer Trennverfahren abtrennen. Das aus dem metallurgischen Silizium stammende Bor wird unter den herrschenden Reaktionsbedingungen ebenfalls hydrochloriert. Insbesondere das gebildete Bortrichlorid (BCl₃) lässt sich von Trichlorsilan und Dichlorsilan durch Destillation aufgrund der nahe beieinander liegenden Siedepunkten der Verbindungen nicht abtrennen. Eine vorhandene Restfeuchte innerhalb eines Prozesses kann dann zur Bildung von Teilhydrolysaten von Bortrichlorid führen.

Am fünfwertigen Phosphor und Arsen ist beispielsweise die durch sie verursachte Dotierung des hergestellten Siliziums als Halbleiter vom n-Typ problematisch. Das dreiwertige Bor führt ebenfalls zu einer unerwünschten Dotierung des hergestellten Siliziums, so dass ein Halbleiter vom p-Typ erhalten wird. Besondere Schwierigkeiten verursacht eine Verunreinigung der Halogensilane mit Bor enthaltenden Verbindungen, weil Bor in der Siliziumschmelze und in der festen Phase einen Verteilungskoeffizient von 0,8 aufweist und daher durch Zonenschmelzen nahezu nicht mehr aus dem Silizium abtrennbar ist (DE 2 546 957 A1). Aus diesem Grund werden Borgehalte von unter 0,05 mg/kg (Gew.-ppm), bevorzugt von unter 5 µg/kg (Gew.-ppb), in Halogensilanen und insbesondere in Chlorsilanen angestrebt.

Aus dem Stand der Technik sind verschiedene Verfahren zur Abtrennung von Bor enthaltenden Verunreinigungen bekannt. Beispielsweise kann eine Abtrennung von Bor enthaltenden Verunreinigungen durch Adsorption an Kieselsäuren aus gasförmigem Trichlorsilan erfolgen, wie dies in der US 4,713,230 offenbart ist. Als Adsorptionsmittel werden Kieselgele mit einem Hydroxygruppengehalt von 1 bis 3 Gew.-% eingesetzt, deren Gehalt mittels Titration mit Lithiumaluminium-di-n-butylamid bestimmt wurde. Das Trichlorsilan wird zur Verminderung des Borgehaltes gasförmig durch eine Kolonne mit Adsorptionsmittel geleitet. Gemäß den Verfahren der US 4,731,230 lässt sich der Borgehalt auf beispielsweise unter 150 ppba vermindern. Bedingt durch die hohen Eingangskonzentrationen an Bortrichlorid im gasförmigen Trichlorsilanstrom ist jedoch die Beladungskapazität des Adsorptionsmittels erreicht, wenn im Trichlorsilanstrom Borgehalte von 150 ppba ermittelt werden. Nachteilig an diesem Verfahren ist daher die resultierende kurze Standzeit des Adsorptionsmittels durch eine schnelle Erschöpfung der Beladungskapazität. Die Beladungskapazität kann über die Bestimmung der Durchbruchskurve ermittelt werden.

Die deutsche Offenlegungsschrift 2 546 957 A1 lehrt ein Verfahren, in dem in flüssiger Phase vorliegende Halogensilane unter Verwendung von hydratisierten Oxiden bzw. Silicaten mit einem Wassergehalt von 3 bis 8 Gew.-% behandelt werden, wobei diese kein komplex gebundenes Wasser umfassen sollen. Die hochsiedenden Borkomplexe werden an den Silicaten adsorbiert, während Bortrichlorid hydrolysiert und komplexiert wird. Die zum Teil mit flüssigem Trichlorsilan übergehenden hochsiedenden Borkomplexe werden anschließend in einer Warmwasserdestillation des Trichlorsilans im Kolonnensumpf abgezogen.

Beiden Verfahren gemeinsam ist das schnelle Erreichen der Beladungskapazität der eingesetzten Adsorptionsmittel. Daher sind diese Adsorptionsanlagen unwirtschaftlich. Dies resultiert aus den kurzen Standzeiten der Adsorptionsmittel, die ein häufiges Austauschen des Adsorptionsmittels und eine Unterbrechung des Verfahrens bedingen. Andererseits müssten die Anlagen sehr großvolumig ausgelegt werden, um die kurzen Standzeiten etwas zu verlängern. Zudem sind die genannten Verfahren meist speziell auf den Trichlorsilanstrom abgestimmt bzw. vor oder nach der Destillationseinheit eines Gesamtverfahrens zur Chlorsilanherstellung integriert. Schwankungen im Borgehalt im Chlorsilanstrom, beispielsweise bei zunehmender Beladung des Adsorptionsmittels, vor der Destillationseinheit setzen sich daher unmittelbar in den aufgetrennten Produktströmen (Dichlorsilan, Trichlorsilan und/oder Tetrachlorsilan) fort.

Aus dem Stand der Technik ist weiterhin bekannt, Bor enthaltende Verbindungen in Chlorsilanen zu vermindern, indem diese mit feuchtem Irlerlgas in Kontakt gebracht werden (DD 158322). Unter anderem reagieren die Chlorsilane mit dem anwesenden Wasser und diese ihrerseits wieder mit dem Bortrichlorid und überführen es in schwerflüchtige Borverbindungen, die destillativ abgetrennt werden können.

Die deutsche Offenlegungsschrift DE 1 906 197 offenbart ein Verfahren, in dem Wasserdampf bzw. ein mit Wasser gesättigter Stickstoffstrom mit dampfförmigen Chlorsilanen zu partiell hydrolysierten Chlorsilanen reagiert, die in flüssiges Chlorsilan dispergiert werden, anschließend werden die partiell hydrolysierten Chlorsilane und die Bor enthaltenden Verbindungen abgetrennt.

Nachteilig an dieser Verfahrensweise sind die benötigten hohen Wassermengen zur vollständigen Umsetzung des Bortrichlorids mit Wasser. Obwohl die Borverbindungen schneller mit Wasser reagieren als die Silane, ist zur vollständigen Entfernung der Bor enthaltenden Verbindungen ein großer molarer Überschuss an Wasser notwendig. Diese Wassermengen führen bei einer vollständigen Entfernung von Bor enthaltenden Verbindungen zu hartnäckigen Verkieselungen der Anlage durch die Bildung von SiO₂ und polymeren Siloxanen sowie zu hohen Mengen an korrosiv wirkendem Chlorwasserstoff. Beides führt zu einer erhöhten Werkstoffbelastung der Produktionsanlagen. Bei einer Reaktionsführung mit üblichen Reaktionszeiten und vertretbarer Wasserzugabe liegen die Borgehalte in den erhaltenen Chlorsilanen oberhalb der Grenzwerte der Spezifikationen zur Herstellung von Solarsilizium oder Halbleitersilizium. Die über dieses Verfahren zu erhaltenden Siliziumqualitäten liegen gemäß der WO 2006/054325 A2 für Halbleiter vom p-Typ bei einem spezifischen Widerstand von 100 Ω • cm.

Aufgabe der vorliegenden Erfindung ist es, ein wirtschaftliches Verfahren zur praktisch quantitativen Entfernung von Bor enthaltenden Verbindungen bereitzustellen, wobei die Entfernung der Bor enthaltenden Verbindungen bereits vor der destillativen Auftrennung oder im vorderen Teil der destillativen Auftrennung des Halogensilanproduktgemisches erfolgen soll, insbesondere des Chlorsilanproduktgemisches umfassend Tetrachlorsilan, Trichlorsilan, Dichlorsilan und/oder Monochlorsilan, so dass über alle Produktströme konstant niedrige Borgehalte gewährleistet werden, insbesondere von weniger als 0,05 mg/kg, zudem soll sich das erfindungsgemäße Verfahren auf einfache Art und Weise in ein kontinuierliches Verfahren zur Herstellung von Reinsthalogensilanen, wie Reinstchlorsilanen, ausgehend von metallurgischem Silizium integrieren lassen.

Gelöst wird die Aufgabe durch das erfindungsgemäße Verfahren und die erfindungsgemäße Anlage entsprechend den Merkmalen der Patentansprüche 1 und 37, wobei in den Unteransprüchen bevorzugte Ausführungsformen dargestellt sind.

Das Verfahren gemäß der Erfindung gliedert sich in mindestens zwei Verfahrensschritte auf. Gegenstand der Erfindung ist ein Verfahren zur Verminderung des Gehaltes an Bor, insbesondere von Bor enthaltenden Verbindungen, in Zusammensetzungen I umfassend mindestens ein Siliziumhalogenid
- indem in einem ersten Schritt die Zusammensetzung I mit bis zu 600 mg Feuchte je Kilogramm der Zusammensetzung I (1) in Kontakt gebracht wird, insbesondere mit 0,5 bis 500 mg/kg (ppm), bevorzugt mit 5 bis 100 mg/kg (ppm), besonders bevorzugt mit 10 bis 50 mg/kg (ppm), und
- gegebenenfalls wird die mit Feuchte in Kontakt gebrachte Zusammensetzung I (1.1) des ersten Schrittes mindestens einmal, bevorzugt mehrfach, vollständig oder teilweise einem Teilschritt (2a) zur Abtrennung hydrolysierter Bor und/oder Silizium enthaltenden Verbindungen zugeführt und eine vorgereinigte Zusammensetzung IIa_{1→∝} (1.2) erhalten, die vollständig oder teilweise erneut dem ersten Schritt oder einem zweiten Schritt des Verfahrens zugeführt wird,
- wobei in dem zweiten Schritt hydrolysierte Bor und/oder Silizium enthaltende Verbindungen destillativ (2) abgetrennt werden, indem als Destillat eine vorgereinigte Zusammensetzung II (2.1.1) mit einem verminderten Gehalt an Bor erhalten wird, insbesondere kann die vorgereinigte Zusammensetzung II, gegebenenfalls nach einem Kondensationsschritt (2.2), in einem dritten Verfahrensschritt mit einem feuchten Adsorptionsmittel (3) in Kontakt gebracht werden und eine vorgereinigte Zusammensetzung III (3.1) gewonnen werden, diese kann vorzugsweise einer Feindestillation (4) zugeführt werden, um mindestens eine höchstreine Siliziumverbindung zu isolieren.

Gegenstand der Erfindung ist auch eine Zusammensetzung III erhältlich nach dem erfindungsgemäßen Verfahren sowie eine höchstreine Siliziumverbindung erhältlich nach dem erfindungsgemäßen Verfahren.

Die vorgereinigte Zusammensetzung II oder eine vorgereinigte Zusammensetzung III werden erfindungsgemäß zur Herstellung von mindestens einer höchstreinen Siliziumverbindung umgesetzt oder verwendet. Höchstreine Siliziumverbindungen umfassen höchstreine Halogensilane, wie HₚSiₘHal_{[(2m+2)-p]} mit m = 1 bis 6, p = 1 bis 13, Hal = Cl, Br und/oder J, Silane, wie HₙSi₂ₙ₊₂ mit n = 1 bis 12 und/oder aber auch Siliziumnitrid, Siliziumoxinitrid, Siliziumdioxid aber auch Silizium, insbesondere Silizium das für die Photovoltaik oder Halbleiterindustrie geeignet ist. Die genannten höchstreinen Siliziumverbindungen weisen bevorzugt eine maximale Verunreinigung je Element oder Verbindung von ≤ 0,05 mg/kg (ppm) auf, bevorzugt von ≤ 5 µg/kg (ppb), insbesondere von ≤ 1 µg/kg (ppb) auf.

Unter einer Zusammensetzung I umfassend mindestens ein Siliziumhalogenid werden erfindungemäß Zusammensetzungen verstanden, die aus Verfahren erhältlich sind umfassend eine Hydrochlorierung oder Hydrohalogenierung von metallurgischem Silizium, gegebenenfalls mit anschließender Abtrennung fester Bestandteile und insbesondere einer nachfolgenden Wäsche und/oder einem Quenchen dieser Reaktionsprodukte. Die Zusammensetzung I umfasst bevorzugt Tetrachlorsilan, Trichlorsilan, Dichlorsilan und/oder Monochlorsilan, insbesondere als Gemisch. Alternativ umfasst sie Halogensilane, wie Tetrabromsilan, Tribromsilan, oder auch gemischte Halogensilane. Wie eingangs ausgeführt, werden bedingt durch die Ausgangstoffe auch die in diesen enthaltende Elemente zum Teil hydrohalogeniert, eine Zusammensetzung I umfasst daher auch immer einen Gehalt an Verunreinigungen, insbesondere mit Bor enthaltenden Verunreinigungen, wie Bortrichlorid oder Teilhydrolysate von Bortrichlorid, die sich durch Restfeuchte bilden.

Die mit Feuchte in Kontakt gebrachte Zusammensetzung I betrifft eine Zusammensetzung I, die erstmalig mit separat zugeführter Feuchte in Kontakt gebracht wurde, beispielsweise wurde eine Zusammensetzung I, resultierend aus einer Hydrohalogenierung von metallurgischem Silizium, mit bis zu 600 mg Feuchte je Kilogramm Zusammensetzung I in Kontakt gebracht, vorzugsweise mit 5 bis 100 mg/kg (ppm), besonders bevorzugt mit 10 bis 50 mg/kg (ppm).

Die separat zugeführte Feuchte umfasst nicht die aus vorangehenden Verfahrensschritten eingeschleppte Feuchte und auch nicht die Feuchte, die aus einer vollständigen oder teilweisen Rückführung der vorgereinigten Zusammensetzung IIa_{1→∝} in den ersten Verfahrensschritt eingeschleppt werden kann. Die Zuführung der Feuchte erfolgt insbesondere über ein Inertgas, wie Stickstoff, Argon und/oder Wasserstoff. Dazu wird üblicherweise flüssiges Wasser, vorzugsweise demineralisiertes Wasser, zusammen mit dem Inertgas bei erhöhter Temperatur homogenisiert, insbesondere vollständig tröpfchenfrei auf über 100 °C erhitzt. Das resultierende erhitzte, feuchte Inertgas wird dann unter erhöhtem Druck in die Zusammensetzung I eingespeist. Bevorzugt wird die Feuchte mit Stickstoff als Trägergas eingespeist.

Vorzugsweise wird die mit Feuchte in Kontakt gebrachte Zusammensetzung I mindestens einmal vollständig oder teilweise, wobei teilweise sich auf 5 bis 95 Gew.-%, bevorzugt auf 50 bis 95, besonders bevorzugt auf 75 bis 95 Gew.-% beziehen, einem Teilschritt zur Abtrennung hydrolysierter Bor und/oder Silizium enthaltenden Verbindungen zugeführt und eine vorgereinigte Zusammensetzung IIa_{1→∝} erhalten, die vollständig oder teilweise, wobei teilweise sich auf 5 bis 95 Gew.- %, bevorzugt auf 50 bis 95, besonders bevorzugt auf 75 bis 95 Gew.-% beziehen, erneut dem ersten Schritt oder einem zweiten Schritt des Verfahrens zugeführt wird. In der Regel werden die hydrolysierten Bor enthaltenden Verbindungen destillativ abgetrennt.

Als vorgereinigte Zusammensetzung IIa_{1→∝} wird eine Zusammensetzung IIa bezeichnet, die diesen Teilschritt in mindestens einem Zyklus durchlaufen hat. Aufgrund einer Vermischung der Zusammensetzungen bei der Rückführung in die Verfahrensschritte eins und/oder zwei können Teilströme der Zusammensetzung den Teilschritt mehrfach durchlaufen, dies soll durch die Bezeichnung Zusammensetzung IIa_{1→∝} ausgedrückt werden.

In einem zweiten Verfahrensschritt werden hydrolysierte Bor und/oder Silizium enthaltende Verbindungen destillativ abgetrennt, indem als Destillat eine vorgereinigte Zusammensetzung II mit einem verminderten Gehalt an Bor erhalten wird.

Unter destillativer Abtrennung wird allgemein eine Überführung einer Halogensilan enthaltenden Zusammensetzung in die Gasphase verstanden, durch die schwerer siedende Komponenten oder Feststoffe, wie Hydrolyseprodukte, abgetrennt werden können, indem die schwerer siedenden Komponenten bevorzugt nicht in die Gasphase überführt werden. Nachfolgend wird eine Halogensilan enthaltende Zusammensetzung kondensiert und als Destillat eine vorgereinigte Zusammensetzung II erhalten, entsprechend kann die Zusammensetzung IIa_{1→∝} im Teilschritt erhalten werden. Dies kann mittels Rohrverdampfer, Dünnschichtverdampfer, Kurzwegverdampfer und/oder Verdampfung aus einer Destillationsvorlage (Blasendestillation) erfolgen. Die Destillation im zweiten Verfahrensschritt erfolgt insbesondere über eine Destillationskolonne mit mindestens einem Trennboden, es können aber auch Kolonnen mit 1 bis 150 Böden eingesetzt werden.

Die vorgereinigte Zusammensetzung II betrifft eine Zusammensetzung deren Gehalt an Bor, insbesondere an Bor enthaltenden Verbindungen, wie Bortrichlorid, hydrolysierte Bor und/oder Bor und Silizium enthaltenden Verbindungen im Vergleich zur Zusammensetzung I um 20 bis 99 Gew.-% vermindert ist, insbesondere ist der Gehalt an Bor um 50 bis 99 Gew.-%, bevorzugt jedoch um 70 bis 99 Gew.-%, 80-99 Gew.-% und besonders bevorzugt um 90 bis 99 Gew.-% vermindert. Ausgedrückt in mg/kg beträgt der Gehalt an Bor nur noch ≤ 1,5 mg/kg in der Zusammensetzung II, insbesondere ≤ 1 mg/kg (ppm), bevorzugt unter ≤ 0,9 mg/kg (ppm). Das noch enthaltene Bor kann im Wesentlichen als flüchtiges Bortrichlorid enthalten sein. Zudem umfasst die Zusammensetzung II vorzugsweise Tetrachlorsilan, Trichlorsilan, Dichlorsilan und/oder Monochlorsilan, insbesondere als Gemisch, zur Abtrennung leichter flüchtiger Komponenten, wie Wasserstoff und/oder Hydrochlorid, kann die Zusammensetzung II einer Kondensation zugeführt werden.

Erfindungsgemäß wird die Zusammensetzung II, gegebenenfalls nach einem Kondensationsschritt, in einem dritten Verfahrensschritt mit einem feuchten Adsorptionsmittel in Kontakt gebracht und eine vorgereinigte Zusammensetzung III gewonnen. Die Zusammensetzung III weist im Vergleich zur Zusammensetzung II einen um 50 bis 99,999 Gew.-% verminderten Gehalt an Bor auf, wobei die Verminderung des Gehaltes an Bor um 80 bis 99,999 Gew.-%, 90 bis 99,999 Gew.-%, und besonders bevorzugt von 95,00 bis 99,999 Gew.-% ist. Ausgedrückt in mg/kg oder µg/kg kann ein Gehalt an Bor von unter 0,1 mg/kg, insbesondere von ≤ 0,05 mg/kg, bevorzugt von ≤ 0,01 mg/kg (ppm) und besonders bevorzugt von ≤ 5 µg/kg Mikrogramm Bor je Kilogramm Zusammensetzung III erreicht werden.

In Relation zur Zusammensetzung I kann die vorgereinigte Zusammensetzung III einen um 99,00 bis 99,9999 Gew.-% verminderten Gehalt an Bor aufweisen, wobei eine Verminderung des Gehaltes von mindestens 99,00 bis 99,999 Gew.-%, vorzugsweise von mindestens 99,50 bis 99,9999 Gew.-% oder höher angestrebt werden.

Erfindungsgemäß wird die durch das Verfahren erhältliche Zusammensetzung III einer Feindestillation zugeführt, um mindestens eine höchstreine Siliziumverbindung zu isolieren. Dies sind vor allem Halogensilane bzw. Siliziumhalogenide, wie Tetrachlorsilan, Trichlorsilan, Dichlorsilan, Monochlorsilan, Monosilan, Disilan und/oder auch Hexachlordisilan. Bevorzugt werden höchstreine Monosiliziumverbindungen, wie Tetrachlorsilan, Trichlorsilan, Dichlorsilan etc. isoliert. Die nach der Feindestillation isolierten höchstreinen Siliziumverbindungen weisen jeweils einen Gehalt an Verunreinigungen von ≤ 50 Mikrogramm je Kilogramm Siliziumverbindung auf, insbesondere von ≤ 25 µg/kg (ppb), bevorzugt von ≤ 10 µg/kg (ppb), besonders bevorzugt von ≤ 5 µg/kg (ppb) oder ≤ 1 µg/kg (ppb) je Siliziumverbindung.

Die Verfahrensschritte eins, der Teilschritt der Rückführung und/oder der zweite Verfahrensschritt können ein- oder mehrfach in Reihe geschaltet werden, in mehren Zyklen durchlaufen werden und/oder die ein- oder mehrfach in Reihe geschalteten Verfahrensschritte können zudem im Verfahren parallel ablaufen. Insbesondere können die Verfahrensschritte eins und zwei vollständig oder teilweise in mindestens einem Zyklus durchlaufen werden, vorzugsweise wird eine Vielzahl von Zyklen durchlaufen. Hierzu können eine Vorrichtung (1) und die Destillationseinheit (2) gemeinsam in einer Einheit integriert sein. Vorzugsweise ist das erfindungsgemäße Verfahren in einem Gesamtverfahren zur Herstellung höchstreiner Siliziumverbindungen, ausgehend von einer Hydrohalogenierung oder Halogenierung von metallurgischem Silizium, integriert.

Nach dem erfindungsgemäßen Verfahren wird die vorgereinigte Zusammensetzung II in einem dritten Schritt mit einem feuchten Adsorptionsmittel in Kontakt gebracht und eine vorgereinigte Zusammensetzung III gewonnen. In diesem dritten Verfahrensschritt durchströmt die Zusammensetzung II im Idealfall in Pfropfen- oder Kolbenströmung das Adsorptionsmittel, ohne eine wesentliche Rückvermischung durch turbulente Strömung. Denkbar ist aber auch ein bloßes Überleiten über das Adsorptionsmittel. Generell kann die Zusammensetzung II im dritten Verfahrensschritt in flüssiger oder gasförmiger Phase mit dem feuchten Adsorptionsmittel in Kontakt gebracht werden. Die Gewinnung der vorgereinigten Zusammensetzung III nach dem in Kontakt bringen kann gleichfalls in gasförmiger oder flüssiger Phase erfolgen. Das in Kontaktbringen mit dem feuchten Adsorptionsmittel kann kontinuierlich oder auch satzweise erfolgen. Beim satzweisen Umsatz kann die Zusammensetzung II beispielsweise mit dem Adsorptionsmittel stehengelassen oder gerührt werden. Üblicherweise wird die vorgereinigte Zusammensetzung II mit dem Adsorptionsmittel bei einer Temperatur zwischen -30 °C und 100 °C und einem Druck zwischen 0,5 bis 20 barabs. in Kontakt gebracht oder strömend mit dem Adsorptionsmittel in diesem Temperatur- und/oder Druckbereich und einer Raumgeschwindigkeit von 0,01 bis 20 Liter/Stunde. Übliche Kontaktzeiten liegen bei 0,1 bis 20 Stunden, bevorzugt bei 0,5 bis 5 Stunden.

Als Adsorptionsmittel kann vorteilhaft, aber nicht ausschließlich, eine gefällte oder pyrogene Kieselsäure, ein Silicagel, ein Zeolith, ein Harz und/oder eine Aktivkohle verwendet werden, wobei der Fachmann weiß, dass generell alle Materialien verwendet werden können, auf deren inneren oder äußeren Oberflächen sich Wasser oder Hydroxygruppen enthaltende Verbindungen anlagern können, die dann mit den Bor enthaltenden Verbindungen reagieren können. In der Regel wird das Adsorptionsmittel partikulär oder extrudiert eingesetzt, wobei das feinpartikuläre Adsorptionsmittel mit Partikelgrößen zwischen 0,5 bis 500 µm oder das extrudierte Adsorptionsmittel mit Partikelgrößen zwischen 0,5 bis 10 mm vorliegen können. Vorzugsweise weist das Adsorptionsmittel eine nahezu einheitliche Partikelgröße auf, damit ein ausreichendes Volumen zwischen den Partikeln zum Durchleiten der Zusammensetzung II vorhanden ist. Generell kann das Adsorptionsmittel in Form von Pulvern, Formkörpern oder als Extrudat vorliegen.

Das feuchte Adsorptionsmittel weist erfindungsgemäß eine chemische Feuchte zwischen 0,1 bis 10 Gew.-% auf, insbesondere zwischen 1 bis 5 Gew.-% (±0,2 Gew.-%), und/oder eine physikalische Feuchte zwischen 0,1 bis 10 Gew.-%, insbesondere zwischen 0,1 und 1 Gew.-% (± 0,1 Gew.-%). Zur Bestimmung der physikalischen Feuchte wird der Trocknungsverlust des Adsorptionsmittels über 2 Stunden bei 105 °C bestimmt und zur Ermittlung der chemischen Feuchte wird anschließend der Glühverlust über 2 Stunden bei 1000 °C bestimmt.

Um das Adsorptionsmittel mit der Zusammensetzung II in Kontakt zu bringen kann es als mindestens ein Adsorptionsbett in einem Festbett-Rohrreaktor, in einer Adsorptionskolonne oder auf Böden bzw. Trennstufen einer Adsorptions- oder Destillationskolonne vorliegen oder in einem Kesselreaktor als Adsorptionsbett, insbesondere partikulär und/oder extrudiert. Bei Vorlage des Adsorptionsmittels in einem Kesselreaktor kann dies ein gerührter Rührkesselreaktor sein.

Liegt das Adsorptionsmittel auf mindestens einer Trennstufe einer Destillationskolonne vor, so kann diese Kolonne erfindungsgemäß aus zwei Bereichen bestehen.
a) Gemäß einer Alternative kann die mit Feuchtigkeit in Kontakt gebrachte Zusammensetzung I und/oder die Zusammensetzung IIa_{1→∝} zunächst in einem ersten Bereich der Kolonne zumindest teilweise von hydrolysierte Bor und/oder Siliziumverbindungen abgetrennt werden. An diesen ersten Bereich kann sich ein zweiter Bereich der Kolonne anschließen, in dem das feuchte Adsorptionsmittel mit der resultierenden Zusammensetzung II in Kontakt gebracht werden kann, um die vorgereinigte Zusammensetzung III zu erhalten.
b) In einer weiteren Alternative kann sich in einem dritten Bereich der Kolonne unmittelbar die Feindestillation der vorgereinigten Zusammensetzung III anschließen, um mindestens eine höchstreine Siliziumverbindung zu erhalten.
Gemäß einer weiteren Alternative c) umfasst die Kolonne einen ersten Bereich in dem das feuchte Adsorptionsmittel mit der vorgereinigten Zusammensetzung II in Kontakt gebracht werden kann, die erhaltene vorgereinigte Zusammensetzung III kann dann in einem zweiten Bereich der Kolonne einer Feindestillation unterzogen werden, um mindestens eine höchstreine Siliziumverbindung zu erhalten. Diese Kolonne kann mit weiteren entsprechenden Kolonnen parallel geschaltet sein.

Bei Verwendung eines üblichen feuchten Adsorptionsmittels, wie beispielsweise ungetrocknetem Aeroperl®300/30 mit einer Beladungskapazität von etwa 1 mg_{BOR}/g_{Aeroper®300/30}, könnte durch die Kombination der Verfahrensschritte eins, gegebenenfalls des Teilschrittes, sowie der Verfahrensschritte zwei und drei die durchschnittliche Standzeit eines Adsorptionsmittels um das zwei bis 25-fache bei gleicher Bedadungkapazität gesteigert werden, bevorzugt um das 5 bis 15-fache. Generell hängt die Standzeit aber von vielen Faktoren ab, wie der inneren und äußeren Oberfläche, der Strömung der Verbindungen, Anzahl der reaktiven Positionen etc.

Bei einer Umrechnung auf einen üblichen großtechnischen Maßstab von 2 t/h Chlorsilan mit einer Eingangskonzentration von 5 mg/kg Bor, das durch 3 t Aeroperl®300/30 geleitet wird, betrüge die Standzeit bis zum Durchbruch, d.h. einer Ausgangskonzentration an Bor nach Kontakt mit dem Adsorptionsmittel > 0,05 mg/kg, lediglich 12,5 Tage. Durch die Kombination der Verfahrensschritte eins, und dem gegebenenfalls durchgeführten Teilschritt sowie der Verfahrensschritte zwei und drei, kann die Standzeit bei einer Eingangskonzentration von 0,5 mg/kg in die Adsorptionseinheit auf 125 Tage erhöht werden oder alternativ die Adsorptionseinheit mit einem deutlich geringeren Volumen und weniger Adsorptionsmittel ausgeführt werden.

Die höchstreine Siliziumverbindung kann eine einzelne Halogenverbindung (Siliziumhalogenid) oder auch ein Gemisch aus Halogensilanen (Siliziumhalogeniden) umfassen. Dies sind vor allem Tetrachlorsilan, Trichlorsilan, Dichlorsilan, Monochlorsilan, Hexachlordisilan, Tetrabromsilan, Tribromsilan, Dibromsilan sowie weitere gebildete Halogensilane (Siliziumhalogenide). Bevorzugt wird die vorgereinigte Zusammensetzung III einer fraktionierten Feindestillation unterzogen, um mindestens eine höchstreine Monosiliziumverbindung wie höchstreines Tetrachlorsilan, Trichlorsilan und/oder Dichlorsilan zu isolieren. Wobei eine höchstreine Siliziumverbindung, insbesondere nach der Feindestillation, einen Gehalt an Bor von ≤ 50 Mikrogramm je Kilogramm (ppb) Siliziumverbindung aufweist, wobei Gehalte von ≤ 50 µg/kg (ppb), insbesondere von ≤ 25 µg/kg (ppb), bevorzugt von ≤ 10 µg/kg (ppb) und besonders bevorzugt von ≤ 5 µg/kg (ppb) oder ≤ 1 µg/kg (ppb) Bor je Kilogramm der höchstreinen Siliziumverbindung erreicht werden können.

Neben einer Verminderung des Borgehaltes, können auch die Gehalte weiterer Verunreinigungen, wie insbesondere von Aluminium-, Eisen-, Arsen-, Magnesium-und/oder Phosphor-Verbindungen vermindert werden. Beispielsweise kann in der vorgereinigten Zusammensetzung III der Gehalt der einzelnen Verunreinigungen um ≥ 5 Gew.-% in Bezug auf die Zusammensetzung I vermindert werden, bevorzugt wird jeweils ein um 5 bis 99,9 Gew.-% verminderter Gehalt erreicht.

Gegenstand der Erfindung ist es ferner, die höchstreinen Siliziumverbindungen, wie das höchstreine Trichlorsilan und/oder Tetrachlorsilan gegebenenfalls in Gegenwart von Wasserstoff zu höchstreinem Silizium abzuscheiden. Dies kann beispielsweise durch thermische Zersetzung von Trichlorsilan an einem heißen Substrat in Anwesenheit von Wasserstoff erfolgen. Die Zersetzungstemperaturen können bei 800 bis 1 300 °C liegen. Typischerweise erfolgt dies nach dem sogenannten CVD (Chemical Vapor Deposition) Verfahren. Eine Alternative bietet die Abscheidung von Tetrachlorsilan/Wasserstoff-Gemischen im kapazitiv gekoppelten Plasma zur Abscheidung von Silizium auf heißen Oberflächen. Ein weiteres Verfahren kann in einer Umsetzung der höchstreinen Halogensilane durch eine Plasmaentladung zur Erzeugung von Polysilanen liegen, die anschließend in Gegenwart von Wasserstoff bei beispielsweise 900 °C zu höchstreinem Silizium umgesetzt werden können. Die nach dem erfindungsgemäßen Verfahren erhaltenden höchstreinen Halogensilane ermöglichen eine Herstellung von höchstreinem Silizium, insbesondere mit einer Reinheit über alle Verunreinigungen von ≤ 1 Mikrogramm/Kilogramm Silizium (µg/kg bzw. ppb), das hervorragend zur Anwendung in der Halbleiterherstellung und zur Herstellung von Wafern in Photovoltaikanlagen geeignet ist. Ausgangsmaterial für Lichtwellenleiter ist in der Regel hochreines SiO₂, für dessen Herstellung geeigneterweise ebenfalls hochreines oder auch höchstreines SiCl₄ eingesetzt wird.

Ein weiterer Gegenstand der Erfindung sieht die Umsetzung von höchstreinem Tetrachlorsilan, höchstreinem Trichlorsilan und/oder höchstreinem Dichlorsilan zu höchstreinem Monosilan vor. Das höchstreine Monosilan (a) kann aus höchstreinem Tetrachlorsilan, Trichlorsilan und/oder Dichlorsilan durch Disproportionierung hergestellt werden. Vorzugsweise wird Monosilan durch Disproportionierung eines Trichlorsilan enthaltenden Halogensilanstroms hergestellt, wobei auch Tetrachlorsilan gebildet wird. Die Disproportionierung erfolgt üblicherweise an katalytisch aktiven Feststoffen, die dem Fachmann an sich bekannt sind, unter einem Druck von 400 mbar bis 55 bar. Katalytisch aktive Feststoffe sind feindisperse Übergangsmetalle oder Übergangsmetallverbindungen aus der Reihe Nickel, Kupfer, eisen, Kobalt, Molybdän, Palladium, Platin, Rhenium, Cer und Lanthan, siehe auch EP 0 658 359 A2. Gleichfalls können als katalytisch aktive Feststoff auch Metalle oder Metallsalze aus der Reihe der Elemente der 2. Hauptgruppe des Periodensystems der Elemente eingesetzt werden. Dies können Kalzium, Strontium, Barium, Kalziumchlorid und/oder Strontiumchlorid sein, siehe auch WO 05/102927. Ebenfalls kann man als katalytisch aktive Feststoffe basische Feststoffe, insbesondere basische lonenaustauscherharze, verwenden, wie sie beispielsweise aus WO 06/029930 und der dort genannten Literatur zu entnehmen sind. Das erhaltene Monosilan wird in mehreren Kondensationsschritten bei Temperaturen von - 40 °C bis 50 °C kondensiert. Ein über Kondensationsschritte und/oder Destillationsschritte erhaltenes höchstreines Monosilan kann anschließend durch thermische Zersetzung zu Reinstsilizium umgesetzt werden, insbesondere zu höchstreinen epitaktischen Schichten. Höchstreines Monosilan kann aber auch in Gegenwart von Ammoniak zur Siliziumnitrid (Si₃N₄) oder in Gegenwart von Distickstoffmonoxid (N₂O) zu Siliziumoxinitrid (Si₂N₂O₉) umgesetzt werden.

Aus dem höchstreinen Tetrachlorsilan kann in Gegenwart von Sauerstoff gleichfalls höchstreines Siliziumdioxid hergestellt werden, dies geschieht üblicherweise bei Temperaturen um 1800 °C im Sauerstoffstrom. Das gebildete Siliziumdioxid kann zur Herstellung von Lichtwellenleitern genutzt werden, denn nur höchstreines Siliziumdioxid hat die notwendige Transparenz, um Licht verlustfrei über lange Strecken zu leiten.

Ein weiterer Gegenstand der Erfindung sieht vor, dass die im erfindungsgemäßen Verfahren eingesetzte Zusammensetzung I umfassend mindestens ein Siliziumhalogenid hergestellt wird durch:
a) Umsetzung von metallurgischem Silizium mit Chlorwasserstoff. In der Regel weist dieses metallurgische Silizium eine Reinheit von 98-99 Gew.-% auf. Durch die Umsetzung des metallurigschen Siliziums werden herstellungsbedingt die Verunreinigungen halogeniert und Verunreinigungen, wie beispielsweise AlCl₃, FeCl₂, BCl₃ oder auch Phosphor enthaltende Verbindungen hergestellt, die in nachfolgenden Verfahrensstufen abgetrennt werden müssen, um ein höchstreines Halogensilan (höchstreines Siliziumhalogenid) oder aus diesen hergestellte Siliziumverbindungen oder Reinstsilizium zu erhalten.
Ferner b) die Umsetzung von metallurgischem Silizium in Gegenwart von Chlorwasserstoff und Tetrachlorsilan oder
c) die Umsetzung von metallurgischen Silizium in Gegenwart von Wasserstoff, Chlorwasserstoff und Tetrachlorsilan.

Den Verfahren a) bis c) ist gemeinsam, dass sie jeweils in einem Wirbelschichtreaktor, Festbettreaktor oder Drehrohofen bei einer Temperatur zwischen 400 und 800 °C und einem Druck zwischen 20 und 45 bar, gegebenenfalls in Gegenwart eines Katalysators erfolgen, wobei nach der Umsetzung a), b) oder c) der Rohgasstrom gegebenenfalls mit kondensierten Chlorsilanen einer Wäsche zugeführt werden oder er wird gequencht. Die Wäsche erfolgt vorzugsweise in einer Destillationskolonne mit 3 bis 100 Böden bei einem Druck von 20 bis 45 bar und einer Temperatur zwischen 150 °C und 230 °C, anschließend kann eine Zusammensetzung I isoliert werden, die dem erfindungsgemäßen Verfahren zur Verminderung des Borgehaltes zugeführt werden kann. Die aus der Umsetzung von metallurgischem Silizium erhaltenen Zusammensetzungen I bestehen im Wesentlichen aus Trichlorsilan, d. h. der Gehalt an Trichlorsilan liegt in der Regel zwischen 50 und 99 Gew.-%, ist jedoch abhängig vom Reaktortyp, beispielsweise für Wirbelschicht: 80% Trichlorsilan und 20 % Tetrachlorsilan, für Festbett: 20 % Trichlorsilan und 80 % Tetrachlorsilan. Die Zusammensetzung I wird vorzugsweise vor der Verminderung des Borgehaltes keiner weiteren Destillation zur Auftrennung der Halogensilane zugeführt.

Das erfindungsgemäße Verfahren und die erfindungsgemäße Anlage werden im Folgenden anhand der in den Figuren wiedergegebenen schematischen Darstellungen erläutert.
- Figur 1a:: Schematische Darstellung des erfindungsgemäßen Verfahrens in einer erfindungsgemäßen Anlage (A).
- Figur 1b:: Alternative schematische Darstellung des Verfahrens in einer alternativen Anlage (A).
- Figur 2:: Schematische Darstellung einer erfindungsgemäßen Anlage umfassend die Anlage (A) und die Teilanlage (B).

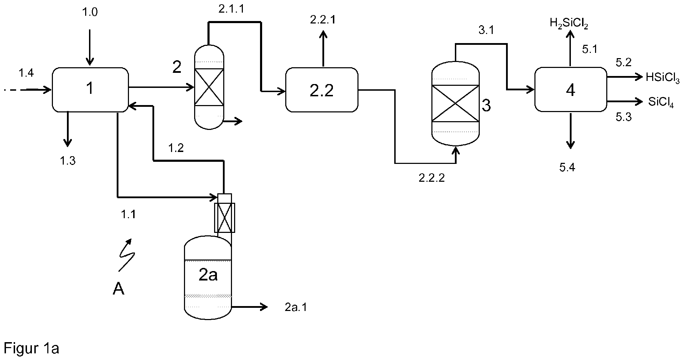

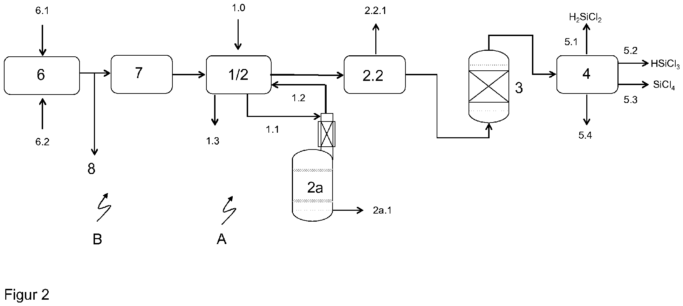

Erfindungsgemäß wird das Verfahren so durchgeführt, dass die Zusammensetzung I (1.4), siehe Figur 1a, mit Feuchte (1.0) in Kontakt gebracht wird, insbesondere mit bis zu 600 mg/kg, gegebenenfalls mehrmaliger Durchführung des Teilschrittes (1.1, 2a, 2a.1, 1.2), und Abtrennen der hydrolysierten Bor und/oder Silizium enthaltenden Verbindungen (2; 1.3 und gegebenenfalls 2a.1), sowie gegebenenfalls einem nachfolgenden in Kontakt bringen der erhältlichen Zusammensetzung II (2.1.1; 2.2.2) mit einem feuchten Adsorptionsmittel (3), um eine Zusammensetzung III (3.1) zu erhalten. Besonders bevorzugt erfolgen diese Verfahrensschritte integriert vor einer fraktionierten Feindestillation (4) in einem Gesamtverfahren zur Herstellung von höchstreinen Halogensilanen (Figur 2), besonders bevorzugt wird das erfindungsgemäße Verfahren in ein Gesamtverfahren zur Herstellung von höchstreinem Silizium, höchstreinem Monosilan (SiH₄), höchstreinem Siliziumdioxid (SiO₂), Siliziumnitrid, Siliziumoxynitrid und/oder zur Herstellung von organofunktionellen Silanen, wie Haftvermittlern integriert. Besonders bevorzugt ist es in ein Gesamtverfahren zur Herstellung von höchstreinem Silizium ausgehend von metallurgischem Silizium integriert.

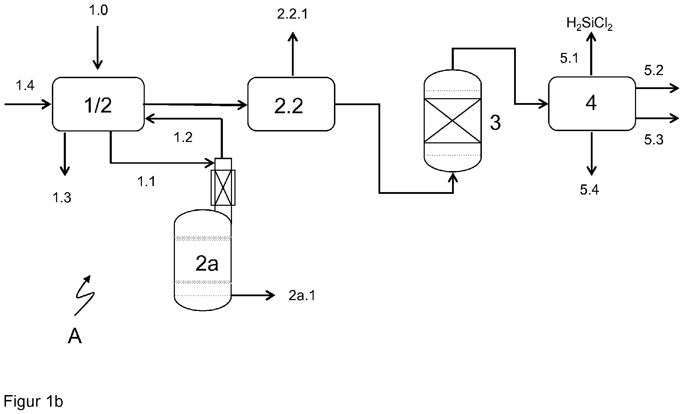

Der Wirkungsgrad des erfindungsgemäßen Verfahrens (Figur 1a/b) ist besonders effizient, wenn das in Kontakt bringen (Feuchteeinspeisung) in einem Verdampfungsapparat (1) erfolgt, wobei es sich dabei um einen Rohrverdampfer oder einen Kessel (Reaktor), beispielsweise einen beheizbaren Kesselreaktor, handeln kann. Die Zugabe der Feuchte (1.0) als Feuchteeinspeisung erfolgt bevorzugt über ein Inertgas, wie feuchtem Stickstoff. Dabei wird beispielsweise VE Wasser über eine unter Druck (Stickstoff) stehende Vorlage bereitgestellt, die Mischung wird mittels eines Verdampfers homogenisiert und absolut tröpfchenfrei auf über 100 °C überhitzt. Die Zugabe des VE Wassers und des Stickstoffs kann jeweils über Feinstregler erfolgen und wird unter erhöhtem Druck der Zusammensetzung I zugeführt. Die Zusammensetzung I wird beispielsweise in einen Kessel geflasht und einstufig verdampft. In dem Kessel (1) liegt dann eine flüssige und gasförmige Phase der Zusammensetzung I vor. An den Kessel kann eine Kondensationskolonne (2) mit mindestens einer Trennstufe angeschlossen sein, in der ein Teil der Zusammensetzung I, die mit Feuchte in Kontakt gebracht wurde, als Rücklauf wieder zurückfließt.

Das erfindungsgemäße Verfahren erlaubt es, die zugegebenen Feuchtigkeitsmengen (1.0) besonders gering zu halten, so dass es zu keinen ausgeprägten Verkieselungen in den Anlagenteilen kommt. Die gebildeten höher siedenden Borkomplexe, wie Cl₂B-O-SiCl₂H oder Cl₂B-O-SiCl₃ durch eine partielle Hydrolyse von Trichlorsilan oder Tetrachlorsilan, können in der nachfolgenden Destillation (2 und/oder 2.a), bei der nur eine geringe Anzahl an Trennstufen notwendig ist, in der Destillationsblase (Sumpf) angereichert werden.

HSiCl₃ + H₂O → HSi(OH)Cl₂ + HCl

BCl₃ + HSi(OH)Cl₂ → Cl₂B-O-SiCl₂ + HCl

SiCl₄ + H₂O → Si(OH)Cl₃ + HCl

BCl₃ + Si(OH)Cl₃ → Cl₂B-O-SiCl₃ + HCl

Die nach dem Destillationsschritt kondensierten Halogensilane (Zusammensetzung II, 2.1.1, 2.2.2) enthalten in der Regel noch flüchtiges nicht umgesetztes Bortrichlorid, sie werden gemeinsam mit einem feuchten Adsorptionsmittel in Kontakt gebracht, indem sie beispielsweise durch eine Adsorptionseinheit (3, Adsorber) mit feuchter Kieselsäure geleitet werden. Vorzugsweise wird eine Pfropfen- oder Kolbenströmung, ohne Rückvermischungen durch Wirbelbildungen, angestrebt. Die üblichen Kontaktzeiten liegen bei 0,1 bis 20 Stunden, wobei 0,5 bis 5 Stunden bevorzugt sind.

Erfindungsgemäß wird eine hohe Reinigung der Zusammensetzung II erreicht, wenn der Anteil an Si-OH Gruppen der Kieselsäure groß ist, damit eine chemische Bindung der Bor enthaltenden Verunreinigungen erfolgen kann (Chemisorption), siehe Morrow B.A., McFarlan A.J.; Chemical Reactions at Silica surfaces (Journal of Non-Crystalline solids, 120 (1990), 61-71).

| | |
|---|---|
| isolierte Si-OH-Gruppe | 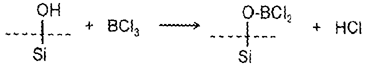 |
| benachbarten Si-OH-Gruppen | 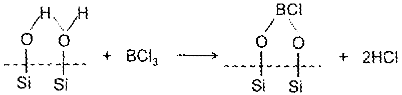 |
| geminale Si-OH-Gruppen | 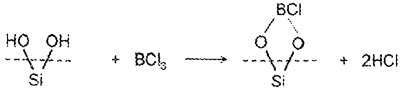 |

Durch die Ausbildung einer chemischen Bindung mit den Bor enthaltenden Verunreinigungen und weiteren Verunreinigungen ist kein weiterer Aufreinigungsschritt, insbesondere keine weitere Trennoption zur Abtrennung der Verunreinigungen mehr notwendig. Besonders effizient wird dieser Schritt aufgrund der deutlich geringeren Eingangskonzentration an Bor enthaltenden Verbindungen durch eine Vorschaltung der Feuchteeinspeisung und Abtrennung der hydrolysierten Bor und/oder Silizium enthaltenden Verbindungen.

Durch diese erfindungsgemäße Kombination der beiden Schritte umfassend das in Kontakt bringen der Zusammensetzung I mit Feuchte, gegebenenfalls mindestens einmaligen Durchführung des Teilschrittes, Abtrennen der Zusammensetzung II und dem in Kontakt bringen der Zusammensetzung II mit einem feuchten Adsorptionsmittel, liegen die Gehalte an Bor, insbesondere an Bor enthaltenden Verunreinigungen durch die erste "Grobreinigung" bereits auf einen sehr niedrigen Niveau, wenn die Zusammensetzung II mit dem Adsorptionsmittel in Kontakt gebracht wird.

Die Kombination dieser Verfahrensschritte erhöht die Standzeiten der Adsorptionsmittel ganz erheblich, wobei gleichzeitig im ersten Verfahrensschritt eine Verkieselung der Anlagenteile deutlich reduziert werden kann, da mit einer sehr viel geringeren Konzentration an Feuchte im ersten Verfahrensschritt gearbeitet werden kann. Gleichfalls ermöglicht das Verfahren einen konstanten, niedrigen Gehalt an Bor im gesamten Produktstrom und damit auch in den nach der Feindestillation erhaltenen Produktströmen, umfassend beispielsweise Tetrachlorsilan, Trichlorsilan, Dichlorsilan etc.

Gegenstand der Erfindung ist auch eine Anlage (A) umfassend eine Vorrichtung (1), der eine Destillationseinheit (2) zugeordnet ist, wobei die Vorrichtung (1) und die Destillationseinheit (2) in der Vorrichtung (1) integriert sein können (Figur 1b), wobei der Vorrichtung (1) gegebenenfalls eine Trenneinheit (2a) zugeordnet ist, insbesondere mit einer zugeordneten Kolonne, wobei ein Stoffstrom im Zyklus (1.1; 1.2) geführt werden kann, der Destillationseinheit (2) ist zudem eine Kondensationseinheit (2.2) zugeordnet zur Teilkondensation der Zusammensetzung II (2.1.1), und insbesondere zur Abtrennung leichtflüchtiger Gase (2.2.1), wie H₂ oder Hydrochlorid, stromabwärts ist der Kondensationseinheit (2.2) eine Adsorptionseinheit (3) zugeordnet, wobei stromabwärts der Adsorptionseinheit (3) eine Destillationseinheit (4) zur Feindestillation der Zusammensetzung III (3.1) zugeordnet ist, der Destillationseinheit (4) ist mindestens eine Produktentnahme (5.1, 5.2, 5.3), insbesondere zur Entnahme von Leichtsiedern wie H₂SiCl₂, HSiCl₃ und/oder SiCl₄ sowie eine Entnahme (5.4) zugeordnet, zur Entnahme von Hochsiedern, polymere Halogensilane und/oder hochsiedende Verunreinigungen. Die Destillationseinheit (2a) umfasst einen Verdampfer und/oder eine Kolonne, insbesondere zur Flashdestillation.

Bevorzugt weist die Vorrichtung zur Einspeisung von Feuchte (1) einen Kessel (Reaktor), einen Rohrverdampfer, einen Plattenverdampfer und/oder eine nach dem Gegenstromprinzip arbeitende Kolonne oder eine ähnlich wirkende Vorrichtung sowie mindestens einen Feinregler zur Zugabe der Feuchte (1.0) auf. Die Zuführung der Zusammensetzung I kann über eine Eduktzufuhr (1.4) erfolgen. Feststoffe und/oder hochsiedende Verbindungen können kontinuierlich oder diskontinuierlich abgezogen werden (1.3), (Figuren 1a/b, 2).

Die Destillationseinheit (2) kann eine Kolonne oder auch einen Plattenkondensator umfassen. Bevorzugt ist eine Blasendestillation. Die Trenneinheit (2a) umfasst insbesondere einen beheizbaren Kessel oder Reaktor und/oder eine beheiz-und/oder kühlbare Kolonne zur Abtrennung hydrolysierter Bor und/oder Silizium enthaltender Verbindungen.

Die Adsorptionseinheit (3) kann mindestens ein Adsorptionsbett in einem Festbettreaktor, Rohrreaktor, in einer Adsorptionskolonne oder den Böden einer Adsorptionskolonne zugeordnet aufweisen. Alternativ kann die Adsorptionseinheit (3) einen Kesselreaktor oder einen Wirbelschichtreaktor mit einem Adsorptionsmittel aufweisen. Vorzugsweise weist die Adsorptionseinheit (3) als Adsorptionsbett oder Adsorptionsmittel mindestens eine gefällte oder pyrogene Kieselsäure, ein Silicagel, ein Zeolith, ein Harz und/oder eine Aktivkohle auf, wobei diese partikulär oder extrudiert vorliegen können und die bereits aufgeführten Partikelgrößen sowie chemische und/oder physikalische Feuchte aufweisen können. Die Destillationseinheit (4) umfasst vorzugsweise mindestens eine Rektifizierkolonne.

Zweckmäßig kann der Vorrichtung zur Einspeisung der Feuchte (1) stromaufwärts eine Destillationseinheit (nicht abgebildet) zur Feindestillation der Halogensilane vorgeschaltet sein, in diesem Fall könnten die aufgetrennten Halogensilane das erfindungsgemäße Verfahren zur Verminderung des Borgehaltes jeweils getrennt durchlaufen.

Zur Durchführung eines Gesamtverfahrens (Figur 2) ist der Anlage (A) stromaufwärts eine Teilanlage (B) zugeordnet, wobei die Teilanlage (B) einen Reaktor (6) aufweist, insbesondere einen Wirbelschicht-, Festbettreaktor oder Drehrohrofen zur Umsetzung von metallurgischem Silizium (6.1) mit Chlorwasserstoff, Wasserstoff und/oder Siliziumtetrachlorid (6.2), stromabwärts ist dem Reaktor (6) eine Vorrichtung (8) zur Abscheidung partikulärer Reaktionsprodukte, wie beispielsweise von Staub oder festen Metallchloriden, zugeordnet, der eine Vorrichtung (7) zur Wäsche oder zum Quenchen des Stoffstrom zugeordnet ist, in der Regel umfasst die Vorrichtung zur Wäsche eine mehrstufigen Destillationskolonne, hier können neben AlCl₃ auch gegebenenfalls vorhandene höher siedende Verbindungen, wie Disilane, Polysilane, Siloxane und/oder Kohlenwasserstoffe aus dem Rohgasstrom der metallurgischen Umsetzung entfernt werden, wobei die Vorrichtung (7) der Vorrichtung (1) zur Einspeisung der Feuchte stromaufwärts zugeordnet ist. Die Teile der Anlage (A und/oder B), die mit den Halogensilanen in Kontakt kommen, sind in der Regel aus nickelhaltigem Werkstoff, insbesondere aus nickelhaltigem Stahl.

Das folgende Beispiel erläutert das erfindungsgemäße Verfahren näher, ohne die Erfindung auf dieses Beispiel zu beschränken.

### Beispiel:

Gehaltsbestimmung von Bor oder anderen Elemente: Die Probenvorbereitung und Messung der Proben erfolgte in einer dem Analytikfachman geläufigen Weise, indem die Probe mit demineralisiertem Wasser hydrolysiert und das Hydrolysat mittels Flusssäure (suprapur) abfuoriert wurde. Der Rückstand wurde in demineralisiertem Wasser aufgenommen und der Elementgehalt mittels ICP-MS (ELAN 6000 Perkin Elmer) bestimmt.

### Beispiel 1

980 g eines üblichen Chlorsilangemisches, das aus einem Hydrochlorierungsprozess von metallurgischen Silizium erhalten wurde, und etwa 80 Gew.-% Trichlorsilan, etwa 20 Gew.-% Tetrachlorsilan, Spuren an Dichlorsilan sowie einem Gehalt an Bor von 8,7 mg/kg enthielt, wurden mit 200 mg/kg demineralisiertem Wasser (VE Wasser) versetzt. Nach einer Reaktionszeit von einer Stunde wurde das Reaktionsgemisch in eine Destillationsblase mit Rührer (1,2 L) überführt und eine Destillation durchgeführt. Als Destillat wurden 888 g Chlorsilane mit einem Gehalt an Bor von 0,82 mg/kg erhalten. Der Rückstand (52 g) bestand im Wesentlichen aus Tetrachlorsilan und hydrolysierten Bor enthaltenden Verbindungen, wobei der Gehalt an Bor 248 mg/kg betrug. In einer nachgeschalteten Kühlfalle wurden 40 g Chlorsilan mit einem Gehalt an Bor von 0,07 mg/kg zurückgehalten.

Das isolierte Destillat wurde im Anschluss über eine mit ungetrocknetem Aeroperl®300/30 gefüllten Adsorber geleitet. Die physikalische Feuchte des Adsorptionsmittels betrug 3 Gew.-% und wurde über einen Trocknungsverlust von 2 Stunden bei 105 °C ermittelt. Die chemische Feuchte des Adsorptionsmittels lag bei 1 Gew.-% und wurde über den Glühverlust bei 1 000 °C über zwei Stunden ermittelt. Die Verweilzeit am Adsorptionsmittel betrug eine Stunde. Nach der Adsorption lag der Gehalt an Bor im Produkt unter 0,01 mg/kg.

Am Beispiel des eingesetzten ungetrockneten Aeroperl®300/30 wurde die Durchbruchskurve bestimmt und ergab eine Beladungskapazität von etwa 1 mg_{Bor}/g_{Aero}pₑᵣₗ®300/30.

Bei einer Umrechnung auf einen üblichen großtechnischen Maßstab von 2 t/h Chlorsilan mit einer Eingangskonzentration von 5 mg/kg Bor, das durch 3 t Aeroperl®300/30 geleitet wird, betrüge die Standzeit bis zum Durchbruch, d.h. einer Ausgangskonzentration an Bor nach Kontakt mit dem Adsorptionsmittel > 0,05 mg/kg, lediglich 12,5 Tage. Durch die Kombination der Verfahrensschritte eins, und dem gegebenenfalls durchgeführten Teilschritt sowie der Verfahrensschritte zwei und drei, kann die Standzeit bei einer Eingangskonzentration von 0,5 mg/kg in die Adsorptionseinheit auf 125 Tage erhöht werden oder alternativ die Adsorptionseinheit mit einem deutlich geringeren Volumen und weniger Adsorptionsmittel ausgeführt werden.

### Bezuqszeichenliste:

A Anlage A; B Teilanlage B;
1 Vorrichtung zur Einspeisung von Feuchte; 1.0 Einspeisung Feuchte (H₂O) beispielsweise Feinstregler; 1.1 Leitung; 1.2 Leitung (Zusammensetzung IIa_{1→∝}); 1.3 Auslass (Feststoffe, Hochsieder); 1.4 Leitung (Zuführung Zusammensetzung I);
2 Destillationseinheit; 2.1.1 Leitung (Zusammensetzung II); 2a Trenneinheit; 2a.1 Auslass (Feststoffe, B-O-Si-Verbindungen); 2.2 Kondensationseinheit; 2.2.1 Auslass (Wasserstoff, Hydrochlorid, Leichtsieder); 2.2.2 Leitung (Zusammensetzung II);
3 Adsorptionseinheit/Adsorptionsmittel, 3.1 Leitung (Zusammensetzung III);
4 Destillationseinheit; 5.1 Produktentnahme (Leichtsieder); 5.2 Produktentnahme (Leichtsieder); 5.3 Produktentnahme (Leichtsieder); 5.4 Entnahme Hochsieder;
6 Reaktor; 6.1 Zufuhr metallurgisches Silizium; 6.2 Zufuhr (HCl oder HCl, SiCl₄ und H₂),
7 Vorrichtung zur Wäsche oder zum Quenchen;
8 Vorrichtung zur Abscheidung partikulärer Reaktionsprodukte (Staub, festen Metallchloride).

### Literatur:

1: Morrow B.A., McFarlan A.J.; Chemical Reactions at Silica surfaces (Journal of Non-Crystalline solids, 120 (1990), 61-71).

## Patentansprüche

1. Verfahren zur Verminderung des Gehaltes an Bor in Zusammensetzungen I umfassend mindestens ein Siliziumhalogenid
- indem in einem ersten Schritt die Zusammensetzung I mit bis zu 600 mg Feuchte je Kilogramm der Zusammensetzung I (1) in Kontakt gebracht wird, wobei der Gehalt an Feuchte mittels eines Inertgases eingebracht wird.
- gegebenenfalls wird die mit Feuchte in Kontakt gebrachte Zusammensetzung I des ersten Schrittes mindestens einmal vollständig oder teilweise einem Teilschritt zur Abtrennung hydrolysierter Bor und/oder Silizium enthaltenden Verbindungen zugeführt und eine vorgereinigte Zusammensetzung IIa_{1→∝} (1.2) erhalten, die vollständig oder teilweise erneut dem ersten Schritt oder einem zweiten Schritt des Verfahrens zugeführt wird,
- und wobei in dem zweiten Schritt hydrolysierte Bor und/oder Silizium enthaltende Verbindungen destillativ abgetrennt werden, indem als Destillat eine vorgereinigte Zusammensetzung II (2.1.1) mit einem verminderten Gehalt an Bor erhalten wird,
- wobei die vorgereinigte Zusammensetzung II, gegebenenfalls nach einem Kondensationsschritt (2.2), in einem dritten Verfahrensschritt mit einem feuchten Adsorptionsmittel (3) in Kontakt gebracht wird und eine vorgereinigte Zusammensetzung III (3.1) gewonnen wird, die einer Feindestillation (4) zugeführt wird, wobei mindestens eine höchstreine Siliziumverbindung mit ≤ 1 µg/kg (ppb) Bor je Kilogramm der höchstreinen Siliziumverbindung isoliert wird.

2. Verfahren nach Anspruch 1,
**dadurch gekennzeichnet,**
**dass** die vorgereinigte Zusammensetzung II noch flüchtiges Bortrichlorid sowie Tetrachlorsilan, Trichlorsilan, Dichlorsilan und/oder Monochlorsilan enthält.

3. Verfahren nach einem der Anspruch 1 oder 2,
**dadurch gekennzeichnet,**
**dass** der Gehalt an Feuchte 0,5 bis 500 mg, vorzugsweise 5 bis 100 mg, besonders vorzugsweise 10 bis 50 mg Wasser je Kilogramm Zusammensetzung I beträgt.

4. Verfahren nach einem der Ansprüche 1 bis 3,
**dadurch gekennzeichnet,**
**dass** die vorgereinigte Zusammensetzung II kontinuierlich oder satzweise in flüssiger oder gasförmiger Phase mit einem feuchten Adsorptionsmittel in Kontakt gebracht wird, vorzugsweise strömend und bei einer Temperatur zwischen - 30 °C und 100 °C und einem Druck zwischen 0,5 bis 20 barabs. und einer Raumgeschwindigkeit von 0,01 bis 20 Liter/Stunde, und eine vorgereinigte Zusammensetzung III gewonnen wird.

5. Verfahren nach einem der Ansprüche 1 bis 4,
**dadurch gekennzeichnet,**
**dass** der Gehalt an Verunreinigungen umfassend Aluminium-, Eisen-, Arsen-, Magnesium- und/oder Phosphor-Verbindungen in der vorgereinigte Zusammensetzung III um ≥ 5 Gew.-% in Bezug auf die Zusammensetzung I vermindert ist.

6. Verfahren nach einem der Ansprüche 1 bis 5,
**dadurch gekennzeichnet,**
**dass** als Adsorptionsmittel eine gefällte oder pyrogene Kieselsäure, ein Silicagel, ein Zeolith, ein Harz und/oder eine Aktivkohle verwendet wird, wobei das Adsorptionsmittel feinpartikulär oder extrudiert ist und das feinpartikuläres Adsorptionsmittel bevorzugt mit einer Partikelgröße zwischen 0,5 bis 500 µm oder das extrudierte Adsorptionsmittel mit einer Partikelgröße zwischen 0,5 bis 10 mm vorliegt.

7. Verfahren nach einem der Ansprüche 1 bis 6,
**dadurch gekennzeichnet,**
**dass** die chemische Feuchte des Adsorptionsmittels zwischen 0,1 bis 10 Gew.-%, vorzugsweise zwischen 1 bis 5 Gew.-% (± 0,2 Gew.-%) liegt und die physikalische Feuchte des Adsorptionsmittels zwischen 0,1 bis 10 Gew.-%, vorzugsweise zwischen 0,1 und 1 Gew.-% (± 0,1 Gew.-%) liegt.

8. Verfahren nach einem der Ansprüche 1 bis 7,
**dadurch gekennzeichnet,**
**dass** das Adsorptionsmittel als mindestens ein Adsorptionsbett in einem Festbett-Rohrreaktor, in einer Adsorptionskolonne oder auf Böden einer Adsorptionskolonne vorliegt oder in einem Kesselreaktor als Adsorptionsbett, partikulär und/oder extrudiert vorliegt.

9. Verfahren nach einem der Ansprüche 1 bis 4,
**dadurch gekennzeichnet,**
**dass** die vorgereinigte Zusammensetzung II einen um 20 bis 99 Gew.-% verminderten Gehalt an Bor im Vergleich zur Zusammensetzung I aufweist, wobei die vorgereinigte Zusammensetzung II einen Gehalt an Bor von ≤ 1,5 mg Bor je Kilogramm Zusammensetzung II aufweist.

10. Verfahren nach einem der Ansprüche 1 bis 4,
**dadurch gekennzeichnet,**
**dass** die vorgereinigte Zusammensetzung III einen um 50 bis 99,999 Gew.-%, vorzugsweise verminderten Gehalt an Bor im Vergleich zur Zusammensetzung II aufweist, wobei die vorgereinigte Zusammensetzung III einen Gehalt an Bor von unter 0,1 mg Bor je Kilogramm Zusammensetzung III aufweist.

11. Verfahren nach einem der Ansprüche 1 bis 10,
**dadurch gekennzeichnet,**
**dass** die vorgereinigte Zusammensetzung III einen um 99,00 bis 99,9999 Gew.-% verminderten Gehalt an Bor im Vergleich zur Zusammensetzung I aufweist.

12. Verfahren nach einem der Ansprüche 1 bis 11,
**dadurch gekennzeichnet,**
**dass** die vorgereinigte Zusammensetzung III einer fraktionierten Feindestillation unterzogen wird, um mindestens eine höchstreine Siliziumverbindung zu isolieren, insbesondere um mindestens eine höchstreine Monosiliziumverbindung umfassend höchstreines Tetrachlorsilan, Trichlorsilan und/oder Dichlorsilan zu isolieren, wobei die höchstreine Siliziumverbindung einen Gehalt an Bor von ≤ 50 Mikrogramm je Kilogramm Siliziumverbindung aufweist.

13. Verfahren nach Anspruch 12,
**dadurch gekennzeichnet,**
**dass** das höchstreine Trichlorsilan und/oder Tetrachlorsilan gegebenenfalls in Gegenwart von Wasserstoff zu höchstreinem Silizium abgeschieden wird.

14. Verfahren nach Anspruch 12,
**dadurch gekennzeichnet,**
**dass** aus dem höchstreinen Tetrachlorsilan, höchstreinen Trichlorsilan und/oder höchstreinen Dichlorsilan höchstreines Monosilan oder aus höchstreinem Tetrachlorsilan höchstreines Siliziumdioxid hergestellt wird.

15. Verfahren nach Anspruch 14,
**dadurch gekennzeichnet,**
**dass** das Monosilan thermisch zu höchstreinem Silizium oder in Gegenwart von Ammoniak zu Siliziumnitrid oder in Gegenwart von Distickstoffmonoxid zu Siliziumoxynitrid umgesetzt wird.

16. Verfahren nach Anspruch 1,
**dadurch gekennzeichnet,**
**dass** die Zusammensetzung I umfassend mindestens ein Siliziumhalogenid hergestellt wird durch;
a) Umsetzung von metallurgischem Silizium mit Chlorwasserstoff oder
b) Umsetzung von metallurgischem Silizium in Gegenwart von Chlorwasserstoff und Tetrachlorsilan oder
c) Umsetzung von metallurgischem Silizium in Gegenwart von Wasserstoff, Chlorwasserstoff und Tetrachlorsilan,
jeweils in einem Wirbelschichtreaktor, Festbettreaktor oder Drehrohofen bei einer Temperatur zwischen 400 und 800 °C und einem Druck zwischen 20 und 45 bar, gegebenenfalls in Gegenwart eines Katalysators, wobei nach der Umsetzung a), b) oder c) der Rohgasstrom gegebenenfalls mit kondensierten Chlorsilanen einer Wäsche oder einem Quenchen unterzogen wird um die Zusammensetzung I zu isolieren.

17. Anlage (A) zur Durchführung eines Verfahrens nach einem der Ansprüche 1 bis 16, umfassend eine Vorrichtung (1) der eine Destillationseinheit (2) zugeordnet ist, der Vorrichtung (1) ist gegebenenfalls eine Trenneinheit (2a) zugeordnet, wobei die Stoffströme zwischen der Vorrichtung (1) und der Trenneinheit (2a) gegebenenfalls im Zyklus (1.1; 1.2) geführt werden, der Destillationseinheit (2) ist stromabwärts eine Kondensationseinheit (2.2) zugeordnet, stromabwärts ist der Kondensationseinheit (2.2) eine Adsorptionseinheit (3) zugeordnet, wobei stromabwärts der Adsorptionseinheit (3) eine Destillationseinheit (4) zur Feindestillation zugeordnet ist, die Destillationseinheit (4) weist mindestens eine Produktentnahme (5.1, 5.2, 5.3) sowie eine Entnahme (5.4) auf, wobei die Vorrichtung zur Einspeisung von Feuchte (1) ein Kessel (Reaktor), ein Rohrverdampfer, ein Plattenverdampfer und/oder eine nach dem Gegenstromprinzip arbeitende Kolonne ist.

18. Anlage nach Anspruch 17,
**dadurch gekennzeichnet,**
**dass** die Adsorptionseinheit (3) mindestens ein Adsorptionsbett in einem Festbettreaktor, Rohrreaktor, in einer Adsorptionskolonne oder den Böden einer Adsorptionskolonne zugeordnet aufweist.

19. Anlage nach Anspruch 17 oder 19,
**dadurch gekennzeichnet,**
**dass** die Adsorptionseinheit (3) einen Kesselreaktor, Rohrreaktor (Festbett-) oder einen Wirbelschichtreaktor mit einem Adsorptionsmittel aufweist.

20. Anlage nach einem der Ansprüche 17 bis 19,
**dadurch gekennzeichnet,**
**dass** die Adsorptionseinheit (3) als Adsorptionsbett oder Adsorptionsmittel mindestens eine gefällte oder pyrogene Kieselsäure, ein Silicagel, ein Zeolith, ein Harz und/oder eine Aktivkohle umfasst.

21. Anlage nach einem der Ansprüche 17 bis 20,
**dadurch gekennzeichnet,**
**dass** das die Destillationseinheit (4) mindestens eine Rektifizierkolonne aufweist.

22. Anlage nach einem der Ansprüche 17 bis 21,
**dadurch gekennzeichnet,**
**dass** der Anlage (A) stromaufwärts eine Teilanlage (B) zugeordnet ist, wobei die Teilanlage (B) einen Reaktor (6) zur Umsetzung von metallurgischem Silizium mit Chlorwasserstoff, Wasserstoff und/oder Siliziumtetrachlorid aufweist, stromabwärts des Reaktors (6) ist dem Reaktor (6) eine Vorrichtung (8) zur Abscheidung partikulärer Reaktionsprodukte zugeordnet, der eine Vorrichtung (7) zur Wäsche und/oder zum Quenchen zugeordnet ist, wobei die Vorrichtung (7) der Vorrichtung (1) zur Einspeisung der Feuchte stromaufwärts zugeordnet ist.

## Claims

1. A process for reducing the boron content in compositions I comprising at least one silicon halide
- in which, in a first step, the composition I is contacted with up to 600 mg of moisture per kilogram of the composition I (1), the moisture content being introduced by means of an inert gas,
- the composition I from the first step, which has been contacted with moisture, is optionally supplied at least once, completely or partially, to a component step for removing hydrolyzed boron- and/or silicon-containing compounds to obtain a prepurified composition IIa_{1→∝} (1.2), which is completely or partially fed back to the first step or to a second step of the process,
- and wherein, in the second step, hydrolyzed boron- and/or silicon-containing compounds are removed by distillation to obtain, as a distillate, a prepurified composition II (2.1.1) with a reduced boron content,
- wherein the prepurified composition II, optionally after a condensation step (2.2), is contacted in a third process step with a moist adsorbent (3) to obtain a prepurified composition III which is supplied to a fine distillation (4), wherein at least one ultrahigh-purity silicon compound with ≤1 µg/kg (ppb) of boron per kilogram of the ultrahigh-purity silicon compound is isolated.

2. The process according to claim 1,
**characterized in that**
the prepurified composition II still contains volatile boron trichloride and tetrachlorosilane, trichlorosilane, dichlorosilane and/or monochlorosilane.

3. The process according to either of claims 1 and 2,
**characterized in that**
the moisture content is 0.5 to 500 mg, preferably 5 to 100 mg, more preferably 10 to 50 mg of water per kilogram of composition I.

4. The process according to any one of claims 1 to 3,
**characterized in that**
the prepurified composition II is contacted continuously or batchwise in the liquid or gaseous phase with a moist adsorbent, preferably flowing and at a temperature in the range from -30°C to 100°C and a pressure in the range from 0.5 to 20 bar_{abs}. and a space velocity of 0.01 to 20 liters/hour, to obtain a prepurified composition III.

5. The process according to any one of claims 1 to 4,
**characterized in that**
the content of impurities comprising aluminum compounds, iron compounds, arsenic compounds, magnesium compounds and/or phosphorus compounds in the prepurified composition III has been reduced by ≥ 5% by weight in relation to the composition I.

6. The process according to any one of claims 1 to 5,
**characterized in that**
the adsorbent used is a precipitated or fumed silica, a silica gel, a zeolite, a resin and/or an activated carbon, wherein the adsorbent is in fine particulate or extruded form and the fine particulate adsorbent is preferably present with a particle size in the range from 0.5 to 500 µm, or the extruded adsorbent with a particle size in the range from 0.5 to 10 mm.

7. The process according to any one of claims 1 to 6,
**characterized in that**
the chemical moisture content of the adbsorbent is in the range from 0.1 to 10% by weight, preferably in the range from 1 to 5% by weight (± 0.2% by weight), and the physical moisture content of the adsorbent is in the range from 0.1 to 10% by weight, preferably in the range from 0.1 to 1% by weight (± 0.1% by weight).

8. The process according to any one of claims 1 to 7,
**characterized in that**
the adsorbent is present as at least one adsorption bed in a fixed bed tubular reactor, in an adsorption column or on trays in an adsorption column, or in a tank reactor as an adsorption bed, in particulate and/or extruded form.

9. The process according to any one of claims 1 to 4,
**characterized in that**
the prepurified composition II has a boron content reduced by 20 to 99% by weight compared to composition I, wherein the prepurified composition II has a boron content of ≤ 1.5 mg of boron per kilogram of composition II.

10. The process according to any one of claims 1 to 4,
**characterized in that**
the prepurified composition III has a boron content preferably reduced by 50 to 99.999% by weight compared to composition II, wherein the prepurified composition III has a boron content of less than 0.1 mg of boron per kilogram of composition III.

11. The process according to any one of claims 1 to 10,
**characterized in that**
the prepurified composition III has a boron content reduced by 99.00 to 99.9999% by weight compared to composition I.

12. The process according to any one of claims 1 to 11,
**characterized in that**
the prepurified composition III is subjected to a fractional fine distillation in order to isolate at least one ultrahigh-purity silicon compound, in particular in order to isolate at least one ultrahigh-purity monosilicon compound comprising ultrahigh-purity tetrachlorosilane, trichlorosilane and/or dichlorosilane, wherein the ultrahigh-purity silicon compound has a boron content of ≤ 50 micrograms per kilogram of silicon compound.

13. The process according to claim 12,
**characterized in that**
the ultrahigh-purity trichlorosilane and/or tetrachlorosilane is optionally deposited in the presence of hydrogen to give ultrahigh-purity silicon.

14. The process according to claim 12,
**characterized in that**
ultrahigh-purity monosilane is prepared from the ultrahigh-purity tetrachlorosilane, ultrahigh-purity trichlorosilane and/or ultrahigh-purity dichlorosilane, or ultrahigh-purity silicon dioxide from ultrahigh-purity tetrachlorosilane.

15. The process according to claim 14,
**characterized in that**
the monosilane is converted thermally to ultrahigh-purity silicon or in the presence of ammonia to silicon nitride or in the presence of dinitrogen monoxide to silicon oxynitride.

16. The process according to claim 1,
**characterized in that**
the composition I comprising at least one silicon halide is prepared by:
a) reaction of metallurgical silicon with hydrogen chloride or
b) reaction of metallurgical silicon in the presence of hydrogen chloride and tetrachlorosilane or
c) reaction of metallurgical silicon in the presence of hydrogen, hydrogen chloride and tetrachlorosilane,
in each case in a fluidized bed reactor, fixed bed reactor or rotary tube furnace at a temperature in the range from 400 to 800°C and a pressure in the range from 20 to 45 bar, optionally in the presence of a catalyst, the reaction a), b) or c) optionally being followed by subjecting the crude gas stream to scrubbing or quenching with condensed chlorosilanes in order to isolate the composition I.

17. A plant (A) for performing a process according to any one of claims 1 to 16, comprising an apparatus (1) with an assigned distillation unit (2), the apparatus (1) optionally having an assigned separation unit (2a), wherein the streams between the apparatus (1) and the separation unit (2a) are optionally conducted in a cycle (1.1; 1.2), a condensation unit (2.2) assigned to the distillation unit (2) is arranged downstream, an adsorption unit (3) assigned to the condensation unit (2.2) is arranged downstream, and a distillation unit (4) for fine distillation assigned to the adsorption unit (3) is arranged downstream, and the distillation unit (4) has at least one product withdrawal point (5.1, 5.2, 5.3) and a withdrawal point (5.4), wherein the apparatus for feeding in moisture (1) is a tank (reactor), a tubular evaporator, a plate evaporator and/or a column which works by the countercurrent principle.

18. The plant according to claim 17,
**characterized in that**
the adsorption unit (3) has at least one assigned adsorption bed in a fixed bed reactor, tubular reactor, in an adsorption column or the trays of an adsorption column.

19. The plant according to claim 17 or 19,
**characterized in that**
the adsorption unit (3) has a tank reactor, (fixed bed) tubular reactor or a fluidized bed reactor with an adsorbent.

20. The plant according to any one of claims 17 to 19,
**characterized in that**
the adsorption unit (3) comprises, as an adsorption bed or adsorbent, at least one precipitated or fumed silica, a silica gel, a zeolite, a resin and/or an activated carbon.

21. The plant according to any one of claims 17 to 20,
**characterized in that**
the distillation unit (4) has at least one rectification column.

22. The plant according to any one of claims 17 to 21,
**characterized in that**
The plant component (B) assigned to the plant (A) is arranged upstream, wherein the plant component (B) has a reactor (6) for reaction of metallurgical silicon with hydrogen chloride, hydrogen and/or silicon tetrachloride, an apparatus (8) for separating out particulate reaction products assigned to the reactor (6) is arranged downstream of the reactor (6), an apparatus (7) for scrubbing and/or for quenching is assigned to said apparatus (8), and the apparatus (7) assigned to the apparatus (1) for feeding in moisture is arranged upstream.

## Revendications

1. Procédé pour diminuer la teneur en bore dans des compositions I comprenant au moins un halogénure de silicium,
- dans lequel, dans une première étape, la composition I est mise en contact avec jusqu'à 600 mg d'humidité par kilogramme de composition I (1), la teneur en humidité étant introduite au moyen d'un gaz inerte,
- le cas échéant, la composition I mise en contact avec de l'humidité de la première étape est introduite au moins une fois, complètement ou partiellement, dans une étape partielle pour la séparation de composés hydrolysés contenant du bore et/ou du silicium et une composition prépurifiée IIa_{1→∝} (1.2) est obtenue, qui est introduite totalement ou partiellement, de nouveau, dans la première étape ou dans une deuxième étape du procédé,
- et les composés hydrolysés contenant du bore et/ou du silicium étant séparés par distillation dans la deuxième étape, dans laquelle on obtient comme distillat une composition prépurifiée II (2.1.1) présentant une teneur réduite en bore,
- la composition prépurifiée II étant mise en contact, le cas échéant après une étape de condensation (2.2), dans une troisième étape de procédé, avec un adsorbant (3) et une composition prépurifiée III (3.1) est obtenue, qui est introduite dans une distillation fine (4), au moins un composé silicié de haute pureté présentant ≤ 1 µg/kg (ppb) de bore par kilogramme de composé de silicium de haute pureté étant obtenu.

2. Procédé selon la revendication 1, **caractérisé en ce que** la composition prépurifiée II contient encore du trichlorure de bore volatil, ainsi que du tétrachlorosilane, du trichlorosilane, du dichlorosilane et/ou du monochlorosilane.

3. Procédé selon l'une quelconque des revendications 1 ou 2, **caractérisé en ce que** la teneur en humidité est de 0,5 à 500 mg, de préférence de 5 à 100 mg, de manière particulièrement préférée de 10 à 50 mg d'eau par kilogramme de composition I.

4. Procédé selon l'une quelconque des revendications 1 à 3, **caractérisé en ce que** la composition prépurifiée II est mise en contact, en continu ou par lots, en phase liquide ou gazeuse, avec un adsorbant humide, de préférence par écoulement et à une température entre -30°C et 100°C et à une pression entre 0,5 à 20 bars_{abs}. et à une vitesse spatiale de 0,01 à 20 litres/heure, et une composition prépurifiée III est obtenue.

5. Procédé selon l'une quelconque des revendications 1 à 4, **caractérisé en ce que** la teneur en impuretés, comprenant des composés à base d'aluminium, de fer, d'arsenic, de magnésium et/ou de phosphore, dans la composition prépurifiée III est réduite de ≥ 5% en poids par rapport à la composition I.

6. Procédé selon l'une quelconque des revendications 1 à 5, **caractérisé en ce qu'**on utilise, comme adsorbant, une silice précipitée ou pyrogène, un silicagel, une zéolithe, une résine et/ou du charbon actif, l'adsorbant étant finement particulaire ou extrudé et l'adsorbant finement particulaire présentant de préférence une grosseur de particule entre 0,5 à 500 µm ou l'adsorbant extrudé présentant une grosseur de particule entre 0,5 à 10 mm.

7. Procédé selon l'une quelconque des revendications 1 à 6, **caractérisé en ce que** l'humidité chimique de l'adsorbant se situe entre 0,1 et 10% en poids, de préférence entre 1 et 5% en poids (± 0,2% en poids) et l'humidité physique de l'adsorbant se situe entre 0,1 et 10% en poids, de préférence entre 0,1 et 1% en poids (± 0,1% en poids).

8. Procédé selon l'une quelconque des revendications 1 à 7, **caractérisé en ce que** l'adsorbant se trouve sous forme d'au moins un lit d'adsorption dans un réacteur tubulaire à lit fixe, dans une colonne d'adsorption ou sur des plateaux d'une colonne d'adsorption ou dans un réacteur à cuve sous forme de lit d'adsorption, sous forme particulaire et/ou extrudée.

9. Procédé selon l'une quelconque des revendications 1 à 4, **caractérisé en ce que** la composition prépurifiée II présente une teneur en bore réduite de 20 à 99% en poids par rapport à la composition I, la composition prépurifiée II présentant une teneur en bore ≤ 1,5 mg de bore par kilogramme de composition II.

10. Procédé selon l'une quelconque des revendications 1 à 4, **caractérisé en ce que** la composition prépurifiée III présente une teneur en bore de préférence réduite de 50 à 99,999% en poids par rapport à la composition II, la composition prépurifiée III présentant une teneur en bore inférieure à 0,1 mg de bore par kilogramme de composition III.

11. Procédé selon l'une quelconque des revendications 1 à 10, **caractérisé en ce que** la composition prépurifiée III présente une teneur en bore réduite de 99,00 à 99,9999% en poids par rapport à la composition I.

12. Procédé selon l'une quelconque des revendications 1 à 11, **caractérisé en ce que** la composition prépurifiée III est soumise à une distillation fine fractionnée, pour isoler au moins un composé silicié de haute pureté, en particulier pour isoler au moins un composé monosilicié de haute pureté, comprenant du tétrachlorosilane, du trichlorosilane et/ou du dichlorosilane de haute pureté, le composé silicié de haute pureté présentant une teneur en bore ≤ 50 microgrammes par kilogramme de composé silicié.

13. Procédé selon la revendication 12, **caractérisé en ce que** le trichlorosilane et/ou le tétrachlorosilane de haute pureté est/sont le cas échéant séparé(s) en présence d'hydrogène sous forme de silicium de haute pureté.

14. Procédé selon la revendication 12, **caractérisé en ce qu'**on prépare du monosilane de haute pureté à partir du tétrachlorosilane, du trichlorosilane et/ou du dichlorosilane de haute pureté ou du dioxyde de silicium de haute pureté à partir du tétrachlorosilane de haute pureté.

15. Procédé selon la revendication 14, **caractérisé en ce que** le monosilane est transformé thermiquement en silicium de haute pureté ou, en présence d'ammoniac, en nitrure de silicium ou, en présence de protoxyde d'azote, en oxynitrure de silicium.

16. Procédé selon la revendication 1, **caractérisé en ce que** la composition I comprenant au moins un halogénure de silicium est préparée par :
a) transformation de silicium métallurgique avec du chlorure d'hydrogène ou
b) transformation de silicium métallurgique en présence de chlorure d'hydrogène et de tétrachlorosilane ou
c) transformation de silicium métallurgique en présence d'hydrogène, de chlorure d'hydrogène et de tétrachlorosilane,
à chaque fois dans un réacteur à couche tourbillonnante, un réacteur à lit fixe ou un four tubulaire rotatif à une température entre 400 et 800°C et à une pression entre 20 et 45 bars, le cas échéant en présence d'un catalyseur, le flux de gaz brut étant le cas échéant soumis, après la transformation a), b) ou c), le cas échéant avec des chlorosilanes condensés, à un lavage ou un refroidissement brusque pour isoler la composition I.

17. Installation (A) pour la réalisation d'un procédé selon l'une quelconque des revendications 1 à 16, comprenant un dispositif (1) auquel est associé une unité de distillation (2), une unité de séparation (2a) étant le cas échéant associée au dispositif (1), les flux de substances étant guidés en circuit (1.1 ; 1.2) entre le dispositif (1) et l'unité de séparation (2a) ; une unité de condensation (2.2) est associée, en aval, à l'unité de distillation (2) ; une unité d'adsorption (3) est associée, en aval, à l'unité de condensation (2.2) ; une unité de distillation (4) pour la distillation fine est associée, en aval, à l'unité d'adsorption (3) ; l'unité de distillation (4) présente au moins un site de prélèvement de produit (5.1, 5.2, 5.3) ainsi qu'un site de prélèvement (5.4) ; le dispositif pour l'injection d'humidité (1) étant une cuve (réacteur), un évaporateur tubulaire, un évaporateur à plaques et/ou une colonne fonctionnant selon le principe de contre-courant.

18. Installation selon la revendication 17, **caractérisée en ce que** l'unité d'adsorption (3) présente au moins un lit d'adsorption dans un réacteur à lit fixe, un réacteur tubulaire, dans une colonne d'adsorption ou dans les plateaux d'une colonne d'adsorption.

19. Installation selon la revendication 17 ou 19, **caractérisée en ce que** l'unité d'adsorption (3) présente un réacteur à cuve, un réacteur tubulaire (à lit fixe) ou un réacteur à couche tourbillonnante, présentant un adsorbant.

20. Installation selon l'une quelconque des revendications 17 à 19, **caractérisée en ce que** l'unité d'adsorption (3) présente, comme lit d'adsorption ou agent d'adsorption, au moins une silice précipitée ou pyrogène, un silicagel, une zéolithe, une résine et/ou un charbon actif.

21. Installation selon l'une quelconque des revendications 17 à 20, **caractérisée en ce que** l'unité de distillation (4) présente au moins une colonne de rectification.

22. Installation selon l'une quelconque des revendications 17 à 21, **caractérisée en ce qu'**une installation partielle (B) est associée, en amont, à l'installation (A), l'installation partielle (B) présentant un réacteur (6) pour la transformation de silicium métallurgique avec du chlorure d'hydrogène, de l'hydrogène et/ou du tétrachlorure de silicium ; un dispositif (8) pour la séparation de produits de réaction particulaires est associé, en aval du réacteur (6), au réacteur (6), auquel est associé un dispositif (7) pour le lavage et/ou le refroidissement brusque, le dispositif (7) étant associé, en amont, au dispositif (1) pour l'injection de l'humidité.
